# EUROPEAN PATENT APPLICATION

(11) **EP 1 675 203 A1**
(43) Date of publication of application: **28.06.2006**
(21) Application number: 05257921.6
(22) Date of filing: 21.12.2005
(51) Int. Cl.: H01M 8/12, H01M 8/06, H01M 8/04, H01M 8/02

(54) **Solid oxide fuel cell with internal combustion chamber**

(30) Priority: 22.12.2004 JP 2004370718
(71) Applicant: SHINKO ELECTRIC INDUSTRIES CO., LTD., Nagano-shi, Nagano 381-2287 (JP)
(72) Inventor: Horiuchi Michio, Nagano 381-2287 (JP); Suganuma, Shigeaki, Nagano 381-2287 (JP); Watanabe, Misa, Nagano 381-2287 (JP); Tokutake, Yasue, Nagano 381-2287 (JP)
(74) Representative: Finnie, Peter John

(57) **Abstract**

A solid oxide fuel cell in which one or more cell units of the fuel cell are disposed in proximity to a flame, generated upon combustion of a gaseous fuel material, and are exposed to the flame, thereby generating electricity. The fuel cell is provided with a combustion chamber for combusting the fuel material in the form of a cylinder, a wall of the cylindrical combustion chamber is defined by the cell units of the fuel cell, and the cell units comprise a substrate consisting of a solid electrolyte, an anode layer formed on a combustion chamber side of the substrate and a cathode layer formed on another side of the substrate opposed to the anode layer. The wall of the combustion chamber has a composite wall structure consisting of at least two wall layers wherein air is guided through an air-guiding path formed between the adjacent wall layers, the innermost wall layer adjacent to the combustion chamber is at least constituted from the cell units, and atmospheric air is supplied to combustion chamber after flowing through the air-guiding path.

## Description

### BACKGROUND OF THE INVENTION

### 1. Field of the Invention

The present invention relates to fuel cells and, more particularly, to solid electrolyte-type or solid oxide fuel cells in which the cell units of the fuel cells are disposed in proximity to a flame, originated from a gaseous fuel material, and are exposed to the flame to thereby generate electricity.

### 2. Description of the Related Art

Hitherto, fuel cells have been developed and practically used as a low-emission electricity generation means to be used in place of steam-power generation means and as an electric energy source for electric vehicles to be used in place of engine-based vehicles using gasoline and other fuels. Especially, recently, the fuel cells have been widely and positively studied to improve their efficiency and realize a reduction in cost of the fuel cells.

As is well known, fuel cells are classified under the different electricity generation systems and, among well-known fuel cells; the most electricity generation efficiency can be expected for the fuel cells using a solid electrolyte, i.e., solid oxide fuel cells (hereinafter, also referred to as SOFCs). As they ensure an extended durability and a diminished production cost in addition to a high electricity generation efficiency, use of the SOFCs is attractive in many technical fields.

In one typical example of a solid oxide fuel cells, a sintered body consisting of yttria (Y₂O₃)-stabilized zirconia (YSZ) is used in the formation of an oxygen ion-conducting solid electrolyte layer. In this fuel cell, a cathode layer is applied on one surface of the electrolyte layer, while an anode layer is applied on an opposite surface of the electrolyte layer. Further, oxygen or an oxygen-containing gas is supplied to the cathode layer side, while a fuel gas such as methane is supplied to the anode electrode side. The resulting cell unit constituted from the electrolyte layer, the anode layer and the cathode layer is contained in a chamber to form a fuel cell.

In fuel cells such as those described above, oxygen (O₂) supplied to the cathode layer is ionized in an interface between the cathode layer and the electrolyte layer to generate oxygen ions (O²⁻). The oxygen ions are conveyed through the electrolyte layer to the anode layer and then reacted with a fuel gas such as methane (CH₄) supplied to the anode layer. As a result of the reaction, water (H₂O) and carbon dioxide (CO₂) are finally produced. In this reaction, as the oxygen ions can emit electrons, there is produced a potential difference between the cathode layer and the anode layer. It is therefore possible to generate of electricity in the fuel cell, if electrically conductive lead wires are connected to each of the cathode layer and the anode layer, because electrons in the anode layer can be introduced through the lead wires to the cathode layer. In this type of fuel cell the temperature of the fuel cell is generally about 1,000°C. Moreover, although not described herein, many improvements have been made in conventional solid oxide fuel cells to simplify the system or structure of the cells, to lower the driving temperature of the cells and to improve the durability of the cells.

In the fuel cells described above, the fuel cell units of the solid oxide fuel cell are contained in a chamber. However, recently, to simply the constitution of the fuel cells, to reduce the size and weight of the cells and to produce the cells at a reduced cost, there has been suggested a solid oxide fuel cell of a type capable of generating electricity upon heating the fuel cell with a flame in which the fuel cell is disposed in or adjacent to the flame and the fuel cell is maintained at its operating temperature by the application of the heat from the flame. In particular, using this type of the fuel cell, as the flame can be directly utilized in the electricity generation, it becomes possible to obtain the effect of shortening the time necessary to create electricity.

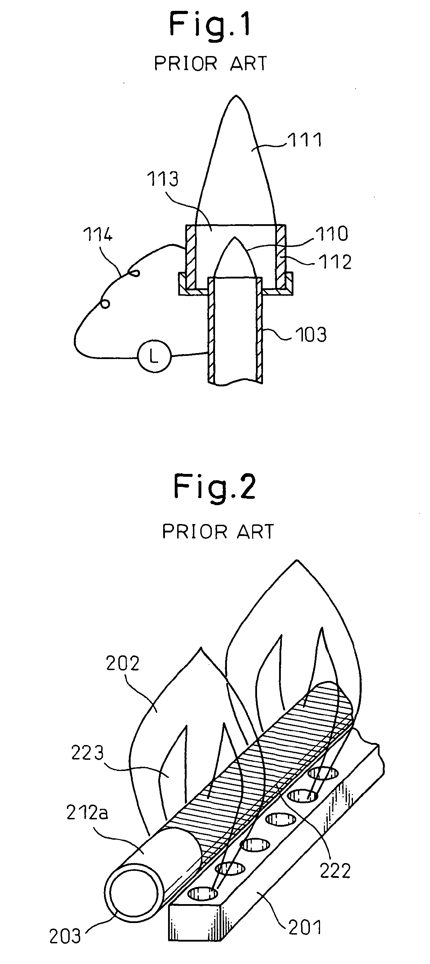

As one example of a solid oxide fuel cell utilizing flame, Japanese Unexamined Patent Publication (Kokai) No. 5-60310 describes a combustion apparatus comprising a means for supplying a gaseous fuel or an evaporating fuel and a combustion space in which the supplied fuel is combusted with air introduced thereto, characterized by providing a solid oxide fuel cell comprising a porous ceramics, a zirconia layer and electrodes around the combustion space. In one example of such a combustion apparatus, as illustrated in Fig. 1, a fuel cell 112 surrounds a combustion space 113. In a burner 103, a primary flame 110 and a secondary flame 111 are discretely formed upon combustion of the fuel. The reference numeral 114 indicates a wire for guiding the generated power.

Further, Japanese Unexamined Patent Publication (Kokai) No. 6-196176 describes a fuel cell comprising a tubular solid-oxide fuel cell. One example of the fuel cell is illustrated in Fig. 2, in which a fuel cell unit 203 of the fuel cell comprises a solid electrolyte tube 212a of zirconia, an anode layer 222, as a fuel electrode, formed in an outer surface of the tube 212a and a cathode layer (not shown), as an air electrode, formed in an inner surface of the tube 212a. In the illustrated fuel cell, the fuel cell unit 203 is disposed in a flame 203 produced in a combustion apparatus 201 to which a fuel gas is supplied, in such a manner that an anode layer 202 is exposed to a reduction flame portion 223 of the flame 202. When the fuel cell unit 203 is disposed in the flame 202, as illustrated, it becomes possible to carry out the electricity generation using, as a fuel, radical components contained in the reduction flame portion 223.

### SUMMARY OF THE INVENTION

The solid-oxide fuel cells such as those described above with reference to Figs. 1 and 2, in which electricity generation is carried out by directly contacting the fuel cell unit with a flame (hereinafter, also referred to as a direct flame-contacting fuel cell), as describe above, can shorten the time for electricity creation and simplify the structure of the fuel cells, and thus they can easily ensure advantages such as a reduction in the size and weight of the cells and a reduction in the production cost.

However, these and other direct flame-contacting fuel cells must still be improved. For example, when a gaseous fuel material is used as a fuel in the direct flame-contacting fuel cells, there arises a problem that a highly increased electricity cannot be realized, as a result of a reduction of the output power, because it is difficult to maintain a high oxygen partial pressure at a cathode side of the fuel cells. Further, due to an unstable air flow in the combustion system, an excess voltage can be generated and, thus, electricity cannot be stably supplied. In addition to these problems, it is desired to provide a method for effectively utilizing the exhaust gas generated during combustion of the gaseous fuel material.

Accordingly, one object of the present invention is to provide a solid oxide fuel cell which improved in comparison to the prior art solid-oxide fuel cells and thus easily enables to shorten the time for electricity creation of the fuel cell, simplifies the structure of the fuel cell and reduces the size, weight and production cost of the fuel cell and, in addition to these advantages, can prevent the reduction of the output power due to low oxygen partial pressure at the cathode side of the fuel cell and the generation of an excess voltage due to an unstable air flow in the combustion system, and also can effectively utilize the produced exhaust gas.

Another object of the present invention is to provide an improved solid oxide fuel cell which effectively utilizes a space in the combustion chamber.

These and other objects of the present invention will be easily appreciated from the following detailed explanation of the present invention.

To accomplish the above objects, the inventors of this application intensively studied the improvement of the solid oxide fuel cells, and found that it is effective to constitute the solid oxide fuel cell as a direct flame-contacting fuel cell in which a fuel cell unit capable of creating electricity is disposed near the flame produced by the combustion of a fuel material to thereby create electricity by the flame,
to use a gaseous fuel material as the fuel material,
to constitute the combustion chamber for combusting the fuel as a cylindrical body having an opened top wall, and
to constitute a wall of the combustion chamber as a multilayered wall structure having an air-guiding path between the wall layers, while defining a fuel cell unit of the fuel cell from the innermost wall layer of the wall structure.

The present invention is based on the above findings and resides in a solid oxide fuel cell in which one or more cell units of the fuel cell are disposed in proximity to a flame, generated upon combustion of a gaseous fuel material, and is exposed to the flame, thereby creating electricity, in which
the fuel cell is provided with a combustion chamber for combusting the fuel material in the form of a cylinder,
a wall of the cylindrical combustion chamber is defined by the cell units of the fuel cell,
the cell units comprise a substrate consisting of a solid electrolyte, an anode layer formed on a combustion chamber side of the substrate and a cathode layer formed on another side of the substrate opposed to the anode layer, and
the wall of the combustion chamber has a composite wall structure consisting of at least two wall layers wherein air is guided through an air-guiding path formed between the adjacent wall layers, the innermost wall layer adjacent to the combustion chamber is at least constituted from the cell units, and atmospheric air is supplied to combustion chamber after flowing through the air-guiding path.

As can be understood from the following detailed description of the present invention, according to the present invention, as the solid oxide fuel cell has the cell structure capable of directly applying the produced flame to an anode layer of the fuel cell for the purpose of generating electricity, the electricity creation time or electromotive time can be shortened in the fuel cell and, as the constitution of the fuel cell can be simplified, small and low-weight fuel cells can be easily realized along with reduction in the production cost.

Further, contrary to the conventional direct flame-contacting fuel cells according to which it was difficult to maintain a high oxygen partial pressure at the cathode side of the fuel cell when a gaseous fuel material was used as the fuel, according to the present invention, oxygen partial pressure at the cathode side of the fuel cell can be always maintained at a atmospheric level and thus a high output power can be obtained with stability. Furthermore, according to the present invention, as the air is supplied to the combustion chamber after provisional heating of the same during flow in the air-guiding path, and also the heated air is opposed to the flame in a bottom section of the combustion chamber, the supplied air can be advantageously utilized in a cathode reaction. Moreover, as a forced and uniform air flow is ensured in the combustion system, the undesirable diffusion over-voltage can be diminished.

Moreover, according to the present invention, when the fuel cell is constituted in the form of a fuel cell structure and two or more fuel cell structures are incorporated into one casing, the space in the fuel cell can be effectively utilized, and a fuel cell with an increased output power can be provided while ensuring the small size of the fuel cell.

In addition, according to the present invention, as an upper space of the combustion chamber is opened, the open space of the combustion chamber can be effectively utilized. For example, heat (waste energy) discharged from the opened space can be utilized for the purpose of heating a kettle or a cooker, for example.

### BRIEF DESCRIPTION OF THE DRAWINGS

Figure 1 is a cross-sectional view illustrating one example of the prior art combustion apparatus provided with the solid oxide fuel cell;
Fig. 2 is a cross-sectional view illustrating another example of the prior art combustion apparatus provided with the solid oxide fuel cell;
Fig. 3 is a perspective view illustrating one preferred embodiment of the solid oxide fuel cell according to the present invention;
Fig. 4 is a cross-sectional view of the fuel cell of Fig. 3 taken along line II-II;
Fig. 5 is an enlarged cross-sectional view of one fuel cell structure in the fuel cell of Fig. 2;
Fig. 6 is a perspective view illustrating one preferred embodiment of the fuel cell unit used in the solid oxide fuel cell according to the present invention;
Fig. 7 is a perspective view illustrating another preferred embodiment of the fuel cell unit used in the solid oxide fuel cell according to the present invention;
Fig. 8 is a cross-sectional view illustrating one preferred embodiment of the partitioned cell members constituting the fuel cell unit;
Fig. 9 is a cross-sectional view illustrating another preferred embodiment of the partitioned cell members constituting the fuel cell unit;
Fig. 10 is a cross-sectional view illustrating another preferred embodiment of the partitioned cell members constituting the fuel cell unit;
Fig. 11 is a cross-sectional view illustrating another preferred embodiment of the partitioned cell members constituting the fuel cell unit; and
Fig. 12 is a cross-sectional view illustrating one preferred embodiment of the fuel cell unit formed upon combination of the partitioned cell members.

### DESCRIPTION OF THE PREFERRED INVENTION

The fuel cell according to the present invention, as described above, resides in a solid oxide fuel cell (SOFC) and, especially, in a direct flame-contacting fuel cell in which the fuel cell units are disposed near the flame to expose them to the heat from the flame, thereby inducing the generation of electricity. The term "near the flame" or "in proximity to the flame" used herein is intended to mean a specific position in which a combustion opening of the gaseous fuel material, for example a top end of the gas burner, is positioned near the fuel cell unit, especially its anode layer so that the flame discharged from the combustion opening can be uniformly contacted the fuel cell unit, thereby ensuring the desired generation of electricity. For the fuel cell of the present invention, it is particularly preferred that a combustion opening of the gaseous fuel material is disposed in a bottom section of a cylindrical combustion chamber and thus the flame upwardly increasing from the combustion chamber is contacted an anode layer of the fuel cell unit.

The fuel cell of the present invention can be advantageously have different embodiments. The fuel cell of the present invention includes, but is not restricted to, the preferred embodiments described below.

First, the solid oxide fuel cell of the present invention is characterized in that its combustion chamber for burning a fuel to generate flame is in the form of a cylinder. The term "cylinder" used herein generally means a cylindrical can-type body, but if desired, in view of the design, application and others of the fuel cell, it may include other configurations than a cylinder such as a cubic can-type body and others. In principal, the cylinder preferably has a top-open structure for effectively utilizing the waste heat of the discharged exhaust gas. When the combustion chamber is a cylinder, an upper opening of the chamber has a circular form.

Further, it is one important constitutional feature of the present invention that the combustion chamber is not intended to be used only as a chamber for burning the fuel as in the conventional fuel cells and, according to the present invention, the combustion chamber is intended to be used as a constitutional member of the fuel cell units, in addition to its use as the burning chamber of the fuel. That is, according to the present invention, a side wall of the cylindrical combustion chamber can constitute the "fuel cell units" of the fuel cell which are the most important section of the fuel cell. Basically, the fuel cell unit of the fuel cell is constituted from a substrate consisting of a solid electrolyte, an anode layer (fuel electrode) formed on a combustion chamber-sided surface of the substrate and a cathode layer (air electrode) formed on another side surface of the substrate opposed to the anode layer.

According to the present invention, various remarkable functions and effects which were not expected in the conventional solid oxide fuel cells can be realized as a result of the formation of a wall of the combustion chamber from the fuel cell units. For example, as the fuel cell units of the fuel cell are disposed in such a manner that they constitute substantially the entire area of the side wall of the combustion chamber, the electricity creation time can be shortened, the cell structure can be simplified, and the size, weight and production cost of the fuel cell can be lowered. More notably, the anode reaction between the flame and the fuel cell units can be attained with a very good efficiency. This is because, according to the present invention, the anode layer of the fuel cell units can be uniformly contacted with the flame and thus hydrocarbons, hydrogen and radicals such as OH, CH, C₂, O₂ and CH₃ contained in the flame can be effectively utilized in the anode reaction.

Furthermore, it is another important constitutional feature of the present invention that a wall of the combustion chamber has a composite wall structure consisting of at least two wall layers, including a wall layer of the fuel cell units, capable of providing an air-guiding path between the wall layers, in place of the single wall structure of the combustion chamber generally adopted in the conventional fuel cells. In particular, in the fuel cells of the present invention, it is essential that the innermost layer, to be contacted the combustion chamber, of the composite wall structure is at least constituted from the fuel cell units of the present invention. Further, according to the present invention, as a wall of the combustion chamber has a composite wall structure with the sandwiched air-guiding path, an atmospheric air positioned out of the outermost layer of the composite wall structure can be introduced into the combustion chamber after the air was preheated as a result of flowing through the air-guiding path between the adjacent wall layers.

The composite wall structure of the combustion chamber will be further described. As described above, the innermost layer of the composite wall structure is at least constituted from a wall layer made of the fuel cell units, and the remaining wall layers may be constituted from the conventional wall material. Of course, if desired, among the remaining wall layers, the second, third, etc. wall layers from the innermost layer may be also formed from the fuel cell units. In any case, in the composite wall structure of the present invention, it is necessary to create a gap, acting as an air-guiding path, between the adjacent wall layers so that a sufficient amount of air in the atmosphere can be guided through the gap. As a result of application of this composite wall structure to the combustion chamber, the air introduced into and guided through the gap can be introduced into the combustion chamber after being gradually heated with the heated wall layers during its flow of the gap, and thus it becomes possible to avoid the problem that the fuel cell units can be rapidly cooled with the atmospheric air due to its direct introduction, along with advantageous utilization of the preheated air in the cathode reaction.

Next, the fuel cell units of the fuel cell are described with regard to the constitution thereof. The fuel cell units, as is described hereinafter, may be constituted from a single cell member or they may be constituted from two or more partitioned cell members in combination. In each of these constitutions, the cell members are basically constituted from the substrate of the solid electrolyte as well as the anode layer and the cathode layer which are applied to the opposed main surfaces of the substrate, respectively. The cell members may further comprise lead wires connected to the anode and cathode layers. If desired, the cell members may further comprise mesh-like metallic member or other members embedded in or laminated to the anode and/or cathode layers. The lead wires may be formed from an electrically conducting material such as silver, gold and platinum. In particular, the mesh-like metallic member can act as a member for conducting reinforcement and voltage collection.

In the practice of the present invention, the substrate of the solid electrolyte is not restricted to the specific one. The substrate may be formed from the conventional solid electrolyte materials which include, but not restricted to:
(a) zirconia-based ceramics such as YSZ (yttria-stabilized zirconia), ScSZ (scandia-stabilized zirconia), and these and other stabilized zirconia further doped with Ce, Al or other metals;
(b) ceria-based ceramics such as SDC (samaria-doped ceria) and GDC (gadllia-doped ceria); and
(c) LSGM (lanthane gallate) and bismuth oxide-based ceramics.

Further, in the practice of the present invention, the anode layer is not restricted to the specific one. The anode layer may be formed from the conventional anode materials which include, but not restricted to:
(a) cermets, for example, cermets comprising nickel and ceramics such as yttria-stabilized zirconia-based ceramics, scandia-stabilized zirconia-based ceramics or ceria-based ceramics (SDC, GDC, YDC and the like);
(b) sintered bodies containing as a principal component thereof electrically conducting oxides in an amount of 50 to 99 wt.%, wherein the conducting oxides include, for example, nickel oxide having solid-dissolved lithium; and
(c) the anode materials (a) or (b) having incorporated therein about 1 to 10wt.% of a metal of the platinum group elements or oxides thereof.

Among these anode materials, the sintered bodies (b) containing conducting oxides, as they exhibit an excellent resistance to the oxidation, can prevent an undesirable phenomenon caused due to oxidation of the anode layer such as reduction of the electricity generation efficiency or stoppage of the electricity generation as a function of increase of the electrode resistance in the anode layer and separation of the anode layer from the substrate. Further, nickel oxide having solid-dissolved lithium is suitably used as the conducting oxides. Furthermore, an increased electricity generation efficiency can be obtained by incorporating into these anode materials a metal of the platinum group elements or oxides thereof.

Similarly, in the practice of the present invention, the cathode layer is not restricted to the specific one. The cathode layer may be formed from the conventional cathode materials which include, but not restricted to, manganic acid, gallium acid or cobalt acid compounds of the third group element of the periodic table such as lanthanum having added thereto strontium (Sr), for example, lanthanum strontium manganite, lanthanum strontium cobaltite, samarium strontium cobaltite and the like.

In the fuel cell of the present invention, both of the anode layer and the cathode layer are preferably formed from a porous body of the electrode material and similarly, the solid electrolyte substrate is preferably formed from a porous body of the electrolyte material. According to the present invention, as the electrolyte substrate is formed from the porous body, it can advantageously avoid the prior art problems caused due to use of the dense electrolyte layer. That is, in the conventional fuel cells, the solid electrolyte layer has been formed as a layer of the dense electrolyte material and thus it has a poor resistance to the thermal impact and can easily cause cracking in the layer when the fuel cells are exposed to sudden change of the temperature. Moreover, as the solid electrolyte layer has been generally formed at a larger thickness than the anode and cathode layers, the generation of cracking in the electrolyte layer can further induce chain-wise cracking in other portions of the fuel cells, thereby causing the decomposition of the fuel cells.

In particular, according to the present invention, as it is porous, the solid electrolyte substrate can exhibit an increased resistance to thermal shock and thus it can prevent cracking or similar defects in the fuel cells, even if the fuel cells are exposed to a sudden change in temperature during the electricity generation process when they are disposed near the flame, or even if they are exposed to the heat cycle conditions with remarkable temperature differences. Moreover, in the porous electrolyte substrate, the porosity is preferably at least 10%, because a porosity of less than 10% does not ensure a remarkable increase of the resistance to thermal shock. The inventors of this application have found that good resistance to thermal shock can be obtained when the porous electrolyte substrate has a porosity of not less than 10%, more preferably porosity of not less than 20%. It is considered that when the substrate is porous, a thermal expansion of the substrate upon heating of the fuel cells can be moderated by the fine pores of the substrate.

As described above, the solid oxide fuel cells of the present invention are classified the group of direct flame-contacting fuel cells. Accordingly, a fuel material is required to generate a flame which is contacted with the fuel cell. In the conventional fuel cells adopting the direct flame-contacting system, there have been suggested use of a gaseous fuel such as city gas or a solid fuel such as wood chips as the fuel material. Under these circumstances, in the practice of the present invention, it is essential to use a gaseous fuel material because, as described above, one object of the present invention resides in prevention of the power reduction which may be caused by use of a gaseous fuel material.

In the practice of the present invention, the gaseous fuel material used includes a wide variety of gaseous fuel materials. Typical examples of the suitable gaseous fuel material include, but are not restricted to, any gas of hydrocarbons such as methane, ethane, propane, butane and others, and any gas originated from liquid fuels or liquefied gas fuels, for example, gasoline-based fuels such as hexane, heptane and octane, alcohols such as methanol, ethanol and propanol, or ketones such as acetone. These gaseous fuel materials are generally used alone, but if desired, they may be used as a mixture or combination of two or more fuel materials. Especially, the hydrocarbon gas is suitable as the gaseous fuel material. The gaseous fuel material can be supplied from a gas cylinder, a container of the liquefied gas, a line of the city gas and other sources to the fuel cell, followed by burning in a combustion tool such as a gas burner appended to the fuel cell.

Further, the flame originated upon combustion of the gaseous fuel includes a diffusion flame and a premixed flame, both of which are usable in the present invention. However, the premixed flame is more preferable in the present invention, because the diffusion flame is instable and thus can easily induce an undesired function reduction of the anode layer due to generation of soot. The premixed flame can be advantageously used, because it is stable and also its size can be easily controlled. In addition, the generation of soot can be prevented by controlling a concentration of the fuel used.

In the fuel cells of the present invention, the combustion chamber, provided with the fuel cell units as a chamber wall or side wall thereof, can be modified within the scope of the present invention in order to improve the structures, performances and others of the fuel cells. For example, it is preferred that the combustion chamber is provided with at least one air supplying opening in an optional position or site of the chamber for the purpose of enabling it to contribute the combustion of the fuel material and also to receive a sufficient amount of air and supply the same to the anode layer. Generally, it is preferred that the air supplying opening is provided in a lower end section of the side wall (cylinder) of the combustion chamber.

In addition to the air supplying opening, the side wall of the combustion chamber may be further provided with at least one air-introducing perforation or slit in order to assist the air supply to the combustion chamber. For example, the air-introducing perforations can be formed by boring two or more small or other openings, apart from each other at a predetermined distance, in any optional positions or sites of the side wall of the combustion chamber. Similarly, the air-introducing slits can be formed by cutting two or more longitudinally extending gaps or others, apart from each other at a predetermined distance, in any optional positions or sites of the side wall of the combustion chamber. Alternatively, when the fuel cell units are formed from the combination of two or more partitioned cell members, a gap between the adjacent cell members may be used as the air-introducing slit.

Further, it is preferred in the fuel cells that the combustion chamber is further provided with an air-supplying mechanism for the combustion chamber such as air fan and air blower in order to assist the supply of air to the combustion chamber and particularly to constantly supply fresh air to the combustion chamber. The air supply mechanism is preferably disposed in a starting point of the air-guiding path defined by the adjacent wall layers of the combustion chamber, i.e., in a neighborhood to the air supplying opening of the combustion chamber in order to ensure the forced supply of air.

In addition to the above features, in the fuel cells of the present invention, the fuel cell units may be constituted as a single cell unit from a single cell member, or they may be constituted by combining two or more cell members. That is, according to one preferred embodiment of the present invention, the fuel cell units can be formed from a single cell member which comprises a substrate of the solid electrolyte, an anode layer and a cathode layer. The substrate, the anode layer and the cathode layer each can be formed from the materials described above.

In another preferred embodiment of the present invention, the fuel cell units can be constituted from a combination of two or more partitioned cell members. The partitioned cell members may be disposed in a lengthwise direction, a crosswise direction or a lengthwise and crosswise direction to form the desired cell units, and the cell members each comprises the substrate of the solid electrolyte, the anode layer and the cathode layer. In the fuel cell units having the above constitution, the cell members can be electrically connected in series or in parallel from each other to complete the desired fuel cell.

In the practice of the present invention, when the fuel cell units are constituted from a combination of two or more partitioned cell members, it is particularly preferred that the anode layer and the cathode layer each is connected in series in the adjacently disposed cell members. Further, the connection in series of the partitioned cell members can be advantageously carried out with different methods, typical embodiments of which are as follows.

According to the first connection method, one common substrate is provided as the solid electrolyte substrate for the two or more partitioned cell members of the fuel cell. That is, the partitioned cell members each is constituted from the common substrate and the dedicated anode and cathode layers for each cell member. In this fuel cell, an anode layer of one partitioned cell member is electrically connected in series through a conductor via, filled through a full thickness of the common substrate, to a cathode layer of the adjacent partitioned cell member.

According to the second connection method, one common substrate is provided as the solid electrolyte substrate for the two or more partitioned cell members of the fuel cell. That is, the partitioned cell members each is constituted from the common substrate and the dedicated anode and cathode layers for each cell member. In this fuel cell, an anode layer of one partitioned cell member is electrically connected in series through a conductor wire, extended and passed through a via-hole of the common substrate, to a cathode layer of the adjacent partitioned cell member.

The second connection method may be modified. According to one modified example of the second connection method, a dedicated solid electrolyte substrate may be provided for each cell member in place of providing one common substrate for all the cell members as described above. That is, according to this alternative embodiment, an anode layer of one partitioned cell member can be electrically connected in series through a conductor wire, extended and passed through a gap or slit between the adjacent cell units or cell members, to a cathode layer of the adjacent partitioned cell member.

According to the third connection method, a dedicated solid electrolyte substrate is provided for each of the two or more partitioned cell members of the fuel cell. That is, the partitioned cell members each is constituted from the dedicated substrate, anode layer and cathode layer. In this fuel cell, an anode-sided metal mesh is embedded or secured in an anode layer of one cell member (first cell member) and, similarly, a cathode-sided metal mesh is embedded or secured in a cathode layer of the cell member (second cell member) adjacent to the first cell member. The metal mesh of the first cell member may be the same with or different from the metal mesh of the second cell member. The metal mesh of the first cell member is electrically connected in series through a conductor wire, extended and passed through a gap between the adjacently disposed first and second cell members, to the metal mesh of the second cell member.

According to the fourth connection method, a dedicated solid electrolyte substrate is provided for each of the two or more partitioned cell members of the fuel cell. That is, the partitioned cell members each is constituted from the dedicated substrate, anode layer and cathode layer. In this fuel cell, an anode-sided metal mesh is embedded or secured in an anode layer of one cell member (first cell member), and similarly a cathode-sided metal mesh is embedded or secured in a cathode layer of the cell member (second cell member) adjacent to the first cell member. The metal mesh of the first cell member may be the same with or different from the metal mesh of the second cell member. The metal mesh of the first cell member is electrically connected in series, through a connecting metal mesh, extended and passed through a gap between the adjacently disposed first and second cell members, to the metal mesh of the second cell member. Preferably, the connecting metal mesh may be either the metal mesh of the first cell member or the metal mesh of the second cell member. However, if desired, it may be formed from any one of other metal meshes.

Of course, if desired, the first to fourth connection methods described above may be used in combination or they may be used in combination with other connection methods.

Moreover, it is preferred in the fuel cells of the present invention that the side wall of the combustion chamber defining the fuel cell units and, if desired, other walls of the combustion chamber further comprise a cylindrical thermal insulating wall surrounding an outer surface of the chamber wall such as the side wall surface and the bottom wall surface of the chamber. The thermal insulating wall may be formed from any one of the conventional insulating materials at different desired thicknesses, and it may be applied to the outer wall of the combustion chamber through an adhesive or by using a mechanical fitting means. Suitable insulating materials include, but are not restricted to, glass wool, inorganic insulating materials and others.

More particularly, the fuel cell of the present invention and the fuel cell units used in the present fuel cell (a single cell member or partitioned cell members) each can be produced by using any conventional method generally used in the production of the fuel cells or using the conventional method after its modification for the practice of the present invention. For example, the partitioned cell members can be produced as follows.

First, the materials for providing a layer of the solid electrolyte generally in the form of powders are blended at the predetermined mixing ratio, followed by shaping the blend into a plate-like molded article or green sheet. Press molding or others may be used to obtain the green sheet. Next, the resulting green sheet is fired and sintered to obtain a substrate as a layer of the solid electrolyte. In the production of the substrate, it is possible to add an optional additive such as a foam generator and others, especially to control the type of the powders and mixing ratio of the foam generator used or further to control the firing conditions such as a firing temperature and time and addition of the pre-firing step, thereby ensuring production of the substrates consisting of the solid electrolyte having different porosities.

Next, formed on the solid electrolyte substrate are an anode layer and a cathode layer in the number necessary to produce the targeted partitioned cell members. According to the present invention, as the anode layer and the cathode layer are required to be electrically connected through a conductor via, a conductor wire or other conductive means from each other, the anode layer and the cathode layer can be formed in any desired configurations depending upon their connection methods and other conditions. For example, if it is contemplated to provide a protrusion to each of the anode layer and the cathode layer and connect them through their protrusions and a conductor via, through-holes can be bored in the protrusion-providing sites of the substrate using the well-known methods such as drilling.

After the formation of the through-holes in the solid electrolyte substrate as described above, a conductor via-providing paste consisting of a suitable electrically conducting ceramic is applied to the through-holes formed in the sites, corresponding to the protrusions of the anode and cathode layers, of the substrate. Further, the same conductive paste is applied in a pattern of the anode layer to one surface of the substrate, and also is applied in a pattern of the cathode layer to another and opposed surface of the substrate. After application of the conductive paste to the substrate, the substrate is fired and sintered to obtain a sheet of the solid electrolyte substrate having incorporated therein tow or more fuel cell units, that is, the partitioned cell members of the present invention.

Further, when the fuel cell units are produced in accordance with the method described above, the resulting partitioned cell members can be sequentially connected in series. That is, an anode layer of one cell member is electrically connected through a conductor via, filled in the through-holes of the substrate, to a cathode layer of the next and adjacent cell member. Such a connection using the conductor via enables a targeted fuel cell unit comprising two or more partitioned cell members connected in series.

The fuel cell units or partitioned cell members according to other embodiments of the present invention can be easily produced as in the manner described above, or by using other methods within the scope of the present invention. For example, in place of using the conductor vias filled in the through-holes of the substrate, an anode layer and a cathode layer may be connected with a conductor wire inserted to the through-holes or other openings of the substrate. Alternatively, an anode layer and a cathode layer may be connected with a conductor wire inserted to a gap or slit between the adjacent partitioned cell members.

As described above, the partitioned cell members may further comprise a metal mesh or other materials similar to the metal mesh in or on the anode and cathode layers thereof. Further, if desired, such a metal mesh or other materials may be used as a means for connecting and securing the anode and cathode layers. When the metal mesh or other materials are used as the connection means, they can be fabricated into any desired configuration in conformity with the configuration of the targeted partitioned cell members, followed by applying the fabricated product to the anode and cathode layers of the cell members. Generally, the metal mesh can be applied to the anode and cathode layers with embedding, fixation or other methods.

Preferably, the metal mesh is formed from any metal material which has a good compatibility in the thermal expansion coefficient with the anode and cathode layers to which the metal mesh is embedded or fixed, and also has a good thermal resistance. Typically, it is desired that a mesh-like article is fabricated from the metal consisting of platinum or an alloy containing platinum. However, as platinum or its alloy is expensive, in practice, it is preferred to use other metals such as stainless steel such as SUS 300 series (304, 316 and others) and SUS 400 series (430 and others) and Hastelloy™ in the formation of the metal mesh, because these metals are commercially available at a low cost. A mesh or opening size of the metal mesh may be widely varied depending upon the constitution of the fuel cell units and other factors, and generally it is in a range of about 1 to 5mm square, more preferably in the range of about 2 to 3mm square.

The metal mesh can contribute to increase in the current collecting property and the mechanical strength of the fuel cells, in addition to the above-described functions of connecting and fixing the adjacent partitioned cell members. Further, because it has a higher thermal conductivity than the electrode materials and the electrolyte materials, the metal mesh can increase the uniformity of the heat generated in the fuel cells, and thus can increase the effect of increasing a resistance of the fuel cells to thermal impact. Especially, according to these embodiments of the present invention, as the metal mesh is embedded or fixed to the anode and cathode layers, it becomes possible to rapidly and uniformly heat the fuel cell units, while avoiding cracking in the solid electrolyte substrate. Further, even if cracking is induced in the substrate, it becomes possible to continue the electricity creation in the fuel cells, insofar as disconnection is not caused in the metal wire or metal mesh connecting the partitioned cell members.

The fuel cell according to the present invention may be constituted from a single-type fuel cell as in the conventional fuel cells or may be constituted from a combination of two or more fuel cells, each capable of acting as a fuel cell, which are referred herein as "fuel cell structures" to distinguish them from the single-type fuel cell. In particular, when it is constituted from the combination of two or more fuel cell structures, the fuel cell of the present invention can easily realize an increase of the output voltage and other advantages at the predetermined size of the fuel cell.

When it is constituted from the combination of two or more fuel cell structures, the fuel cell of the present invention can be carried out with different combinations of the fuel cell structures. For example, a group of the fuel cell structures having any desired combination is contained in a single casing for the fuel cell. The fuel cell structures contained in the casing may be the same or different from each other with regard to the configuration, constitution and size of the fuel cell. Of course, if desired, different fuel cell structures may be used in an optional combination and in an optional disposal pattern. Further, when the fuel cell structures are disposed in the casing in such a manner that a surface of the disposed fuel cell structures, i.e., an upper opening of the combustion chamber of the fuel cell structures, has an even level or surface, it becomes possible to provide compact-sized fuel cells having a good handling property. Furthermore, use of the combination of two or more fuel cell structures in the casing is an example of the preferred embodiments of the fuel cell according to the present invention, and thus other embodiments such as fixation of the combination of two or more fuel cell structures to a common supporting base member in place of using a casing may be applied to the fuel cell.

The fuel cells of the present invention have a smaller size and a lower weight and can be produced at a lower production cost in comparison with the prior art fuel cells, and their maintenance can be easily carried out. Thus, the fuel cells can be advantageously used in a wide variety of technical fields. For example, the fuel cells of the present invention can be used as an electric source for an LED (light-Emitting Diode), a display LCD (Liquid Crystal Device), driving potable radios or TVs, a PDA (Personal Digital Assistant) and other electronic devices. Further, they can be also used as an electric source for use in outdoor equipment, for emergency purposes and at the time of electric failure.

Next, the fuel cells according to the present invention will be further described with reference of the accompanying drawings. Note, however, that the illustrated fuel cells are only examples of the fuel cells according to the preferred embodiments of the present invention and, as will be appreciated by a person skilled in the art, the constitution, size and others of the fuel cells can be changed or modified within the scope of the present invention. Note also that as the materials suitable for the formation of the members constituting the fuel cells have been described hereinabove, they are not described in the following description referred to the drawings.

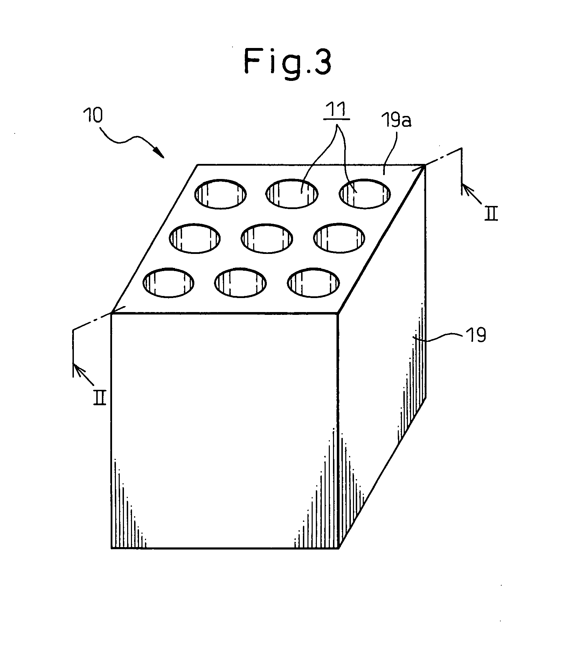

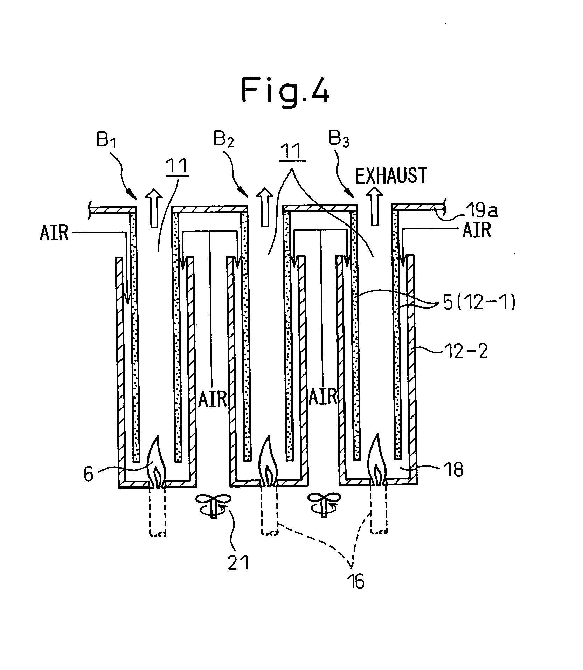

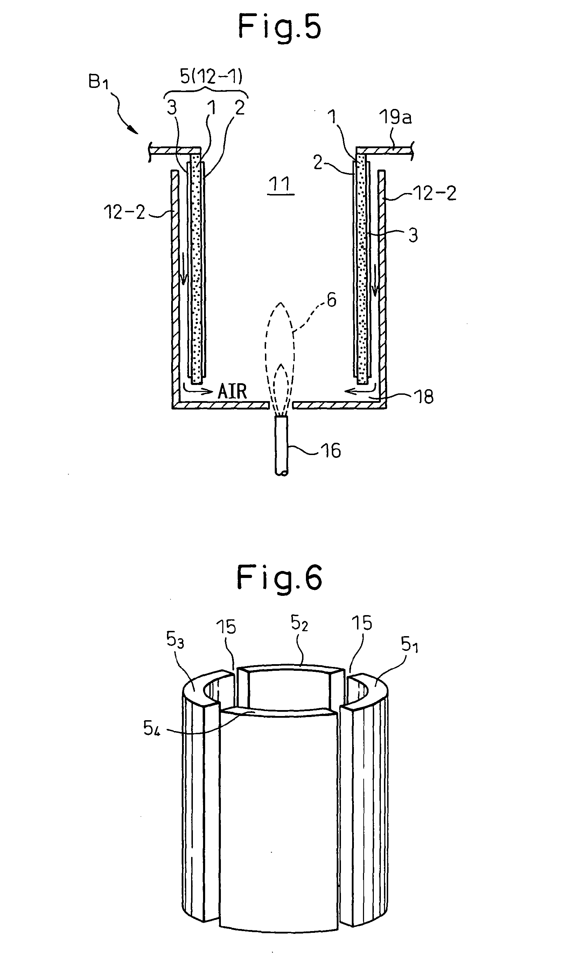

Fig. 3 is a perspective view illustrating one preferred embodiment of the solid oxide fuel cell according to the present invention and Fig. 4 is a cross-sectional view of the fuel cell of Fig. 3 taken along line II-II thereof. In these drawings, illustrated is an example of the fuel cell which was produced by combining totally nine fuel cell structures each satisfying the constitutional requirements of the fuel cell according to the present invention, to complete a high-performance fuel cell. However, it should be noted that the fuel cell of the present invention may be in the form of a single fuel cell as is illustrated in Fig. 5 which is an enlarged cross-sectional view of one fuel cell structure from the group of the fuel cell structures of Fig. 4.

Referring to Fig. 5, basically, the fuel cell of the present invention has a single fuel cell unit 5 which is also referred in the present invention to as a "fuel cell member" and a combustion chamber 11, a chamber wall 12-1 of which is constituted from the single fuel cell unit 5. The fuel cell unit 5 is constituted from a substrate 1 consisting of a solid electrolyte, an anode layer 2 formed on a combustion chamber side of the substrate 1 and a cathode layer 3 formed on another side of the substrate 1 opposed to the anode layer 2. The illustrated combustion chamber 11 has a two wall layers structure which comprises a cylindrical wall layer (inner layer) 12-1 constituted from the fuel cell unit to be contacted with a flame 6 of the combustion chamber 11 and a similar cylindrical wall layer (outer layer) 12-2 surrounding the cylindrical inner wall layer 12-1. Note in the illustrated instance that the wall layer 12-1 was formed from the fuel cell unit 5 itself but, in view of improving the fabrication of the wall layers and others, it is contemplated that the wall layer 12-1 is integrally formed together with the wall layer 12-2 from the same wall material and then a separately prepared fuel cell unit is applied through, for example, adhesion or mounting, to an inner surface of the wall layer 12-1. Further, although an atmospheric air can be introduced from an upper space of the wall layer 12-2 into the illustrated combustion chamber 11, a third wall layer may be additionally applied to outside of the wall layer 12-2, while fixing an upper end of the third wall layer to an upper surface 19a of the casing 19, so that an atmospheric air can be introduced from a lower space of the third wall layer into the combustion chamber 11.

In the illustrated fuel cell 10, as is illustrated with an arrow, fresh air out of the combustion chamber 11 is guided through gaps (air-guiding paths) formed between the wall layers 12-1 and 12-2 and is supplied to an air supplying opening 18 provided in a bottom portion of the combustion chamber 11 while being heated with the heated wall layers during flow of the air-guiding paths. The illustrated combustion chamber 11 has the configuration of a circular cylinder, but if desired, the combustion chamber 11 may have other configurations such as a cubic body or an elliptical body.

Further, the combustion chamber 11 has a combustion opening of the combustion apparatus (gas burner in the illustrated embodiment) 16 disposed in a closed bottom section of the combustion chamber. Upon ignition of the gaseous fuel supplied to the gas burner 16, a flame 6 is generate as a result of the gaseous fuel, and then the flame 6 is contacted with an anode layer 2 of the fuel cell unit 5. As a result, electricity is generated by the anode reaction originated from the flame 6.

Preferably, the fuel cell illustrated in Fig. 5 may be used as a fuel cell structure. In such a case, as illustrated in Figs. 3 and 4, each fuel cell is specifically used as a fuel cell structure and a plurality of fuel cell structures are combined to complete a fuel cell 10. In the fuel cell 10, a total of nine fuel cell structures B1, B2, B3, etc. are disposed in parallel and contained in a casing 19 made of a stainless steel. Each fuel cell structure has a cell constitution of the fuel cell described above with reference to Fig. 5. However, in the fuel cell 10 that the configuration, constitution, number and other factors of the fuel cell structures used may be freely varied depending upon, for example, the intended application or other requirements of the fuel cell, and similarly the configuration and material of the casing used may be freely varied. As one example, it is suggested to provide a casing in the form of the circular cylinder, and to dispose a main cylindrical fuel cell structure having a relatively large diameter in a central section of the casing, while disposing a plurality of subsidiary cylindrical fuel cell structures having a relatively small diameter in a peripheral portion of the main fuel cell structure at a substantially equal distance. Moreover, the illustrated fuel cell 10 further comprises an air fan 21 as an air-supplying mechanism in a lower section thereof in order to ensure a force air supply in the air-guiding paths and also accelerate an air supply from the air supplying opening 18 to the chamber 11.

The fuel cell 10 can be operated in accordance with the manner similar to that described above with reference to Fig. 5. That is, atmospheric air, as illustrated with an arrow, is forcedly guided through air-guiding paths having a predetermine path wide formed between the fuel cell unit 5 (inner wall layer 12-1) and an outer wall layer 12-2 of the combustion chamber 11, and is supplied through the air supplying opening 18 to the combustion chamber 11 while being heated with the heated wall layers 12-1 and 12-2 in the air-guiding paths. On the other hand, a gaseous fuel is ignited when it is supplied into a gas burner 16. A flame 6 is generated upon combustion of the gaseous fuel, and is contacted with an anode layer 2 of the fuel cell unit 5. As a result, electricity is created by the anode reaction originated from the flame 6. Further, as each of the upper opening sections of the combustion chambers 11 has an even level or surface in the upper surface 19a of the casing 19, any desired apparatus such as cooking equipment requiring heating can be disposed on the upper opening sections for the heating purpose, thereby effectively utilizing heat of the exhaust gas.

Hereinabove, use of the single fuel cell unit in the fuel cell was described with reference to the fuel cell 10 of Figs. 3 to 5. However, if desired, the fuel cell unit may be divided into two or more cell members to constitute a fuel cell unit consisting of a combination of two or more partitioned fuel cell members. In this embodiment of the fuel cell unit, each of the partitioned cell members has to be electrically connected from each other so that the cell members can act as a fuel cell unit.

Although a solid electrolyte substrate, an anode layer and a cathode layer are omitted from the drawing in order to simplify the explanation of the constitution, Fig. 6 illustrates a solid oxide fuel cell having four longitudinally or lengthwise divided fuel cell units, i.e., partitioned cell members 5₁, 5₂, 5₃ and 5₄. Each of the partitioned cell members is electrically connected from each other through its anode and cathode layers, although not illustrated in this drawing. For the electrical connection, a connection means such as a conductor wire or a metal mesh may be used. Further, a gap (slit) 15 formed between the adjacent partitioned cell members can act as an air-introducing perforation or slit for supplying air into a combustion chamber.

As can be appreciated from the above description referring to Fig. 6, the partitioned cell members may be formed by lengthwise separating a chamber wall of the combustion chamber, i.e., fuel cell unit, or they may be formed by crosswise separating the chamber wall. Further, if desired, the partitioned cell members may be formed by lengthwise and crosswise separating the chamber wall. Furthermore, in these cases, the resulting partitioned cell members may be electrically connected to each other in series or in parallel.

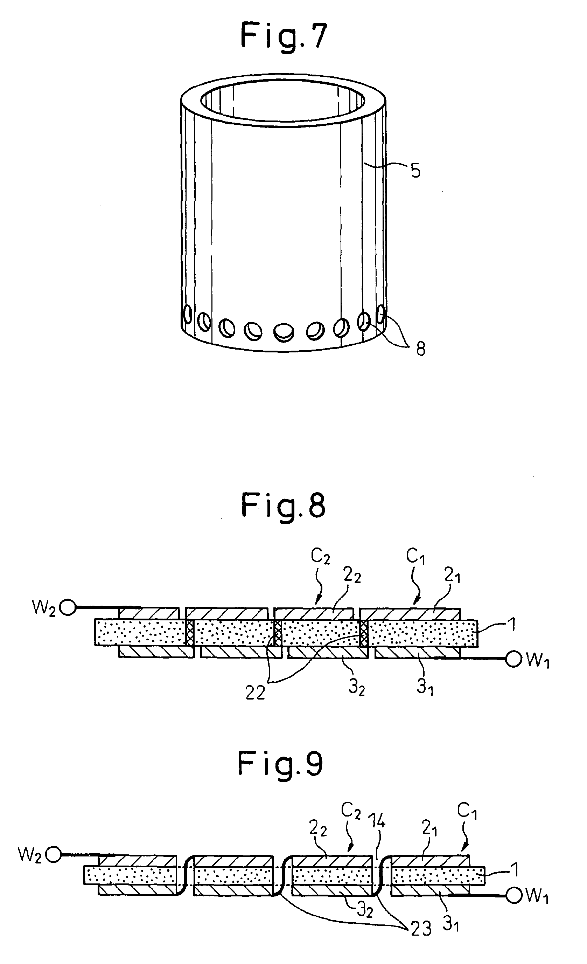

Fig. 7 illustrates a solid oxide fuel cell of the present invention in which a plurality of air-introducing perforations 8 are provided in a lower section of the fuel cell unit 5 defining a chamber wall of the combustion chamber. As the perforations 8 are contained in the chamber wall, air used for the purpose of contributing the combustion of the solid fuel and supplied to an anode layer of the fuel cell unit can be effectively introduced into the combustion chamber. Although the air-introducing perforations 8 are provided in the fuel cell unit 5 in the illustrated instance, any other air-introducing means such as one or more slits may be provided in the fuel cell unit 5 in place of or in combination with the perforations 8. For example, at least one longitudinally extended slit may be fabricated in any suitable position of the chamber wall.

Figs. 8 to 11 each illustrates the method for mutually connecting partitioned cell members to each other when the fuel cell unit is constituted from the partitioned cell members. Note in these drawings that the cell members are shown in the form of a flat plate for the ease of explanation, but generally they may be suitably curved to provide a fuel cell unit in the form of a circular cylinder.

Referring to Fig. 8, the fuel cell unit is constituted from a plurality of the partitioned cell members C₁, C₂, etc.. Further, the partitioned cell members each has a solid electrolyte substrate (in the illustrated instance, the substrate is common to all the partitioned cell members) as well as an anode layer and a cathode layer which were applied to the opposite surface of the substrate, respectively. For example, referring to the partitioned cell member C₁, an anode layer 2₁ is provided in one surface of the common solid electrolyte substrate 1, and a cathode layer 3₁ is provided in another surface of the same substrate 1. The anode layer 2₁ of the partitioned cell member C₁ is electrically connected through a conductor via 22, filled in a through-hole of the common substrate 1, to a cathode layer 3₂ of the adjacent cell member C₂. As illustrated, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

Fig. 9 illustrates another fuel cell unit which is substantially the same as that of Fig. 8 except that a conductor wire is used in place of the conductor via, and thus an anode layer and a cathode layer are electrically connected through the conductor wire. That is, the fuel cell unit is constituted from a plurality of the partitioned cell members C₁, C₂, etc.. Further, as can be understood by referring to the partitioned cell member C₁, for example, an anode layer 2₁ is provided in one surface of the common solid electrolyte substrate 1, and a cathode layer 3₁ is provided in another surface of the same substrate 1. The anode layer 2₁ of the partitioned cell member C₁ is electrically connected through a conductor wire 23, passed through a through-hole 14 of the common substrate 1, to a cathode layer 3₂ of the adjacent cell member C₂. As illustrated, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

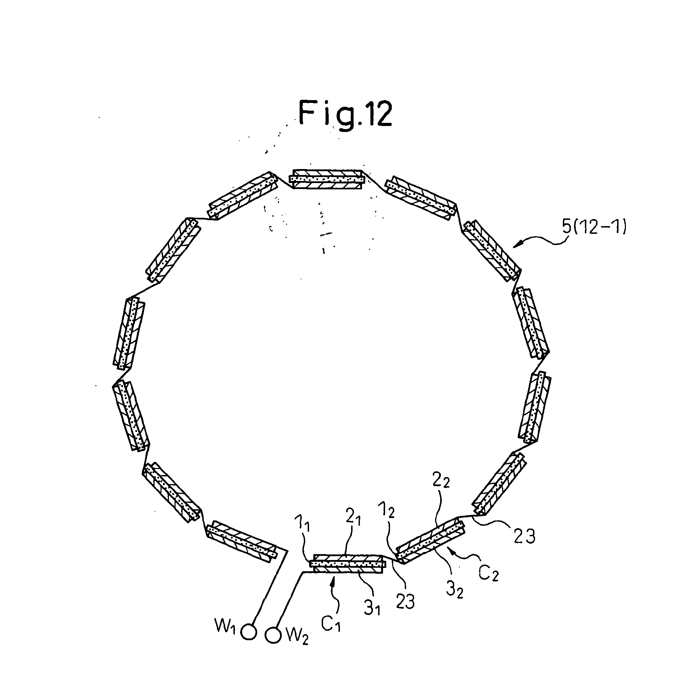

Alternatively, as is described hereinafter referring to Fig. 12, the partitioned cell members C₁, C₂, etc. each may have the its own solid electrolyte substrate 1₁, 1₂, etc. and the anode layer 2₁ of the partitioned cell member C₁ is electrically connected through a conductor wire 23, passed through a gap between the adjacent solid electrolyte substrates, to a cathode layer 3₂ of the adjacent cell member C₂.

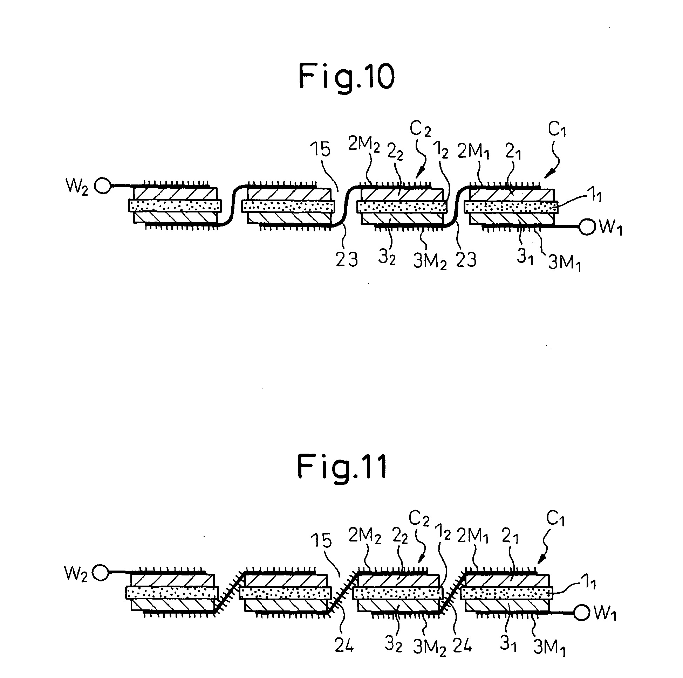

Fig. 10 illustrates a fuel cell unit in which a plurality of the partitioned cell members C₁, C₂, etc. are discretely constituted, a metal mesh is embedded to each of the anode layer and the cathode layer, and in the adjacent partitioned cell members, the anode layer (the embedded metal mesh) and the cathode layer (the embedded metal mesh) in the adjacent cell members are connected through a conductor wire 23 passed through a gap between the adjacent cell members.

That is, as is illustrated, the fuel cell unit is constituted from a plurality of the partitioned cell members C₁, C₂, etc., and the partitioned cell members each is constituted from a solid electrolyte substrate, an anode layer and a cathode layer. For example, referring to the partitioned cell member C₁, an anode layer 2₁ having embedded therein a metal mesh 2M₁ is provided in one surface of the solid electrolyte substrate 1₁, and a cathode layer 3₁ having embedded therein a metal mesh 3M₁ is provided in another surface of the same substrate 1₁. The metal mesh 2M₁ of the partitioned cell member C₁ and the metal mesh 3M₂ of the partitioned cell member C₂ adjacent thereto are electrically connected through a conductor wire 23 passed through a gap between the adjacent cell members C₁ and C₂. Thus, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

Fig. 11 illustrates a fuel cell unit in which a plurality of the partitioned cell members C₁, C₂, etc. are discretely constituted, a metal mesh of the same conductive material is embedded to each of the anode layer and the cathode layer, and in the adjacent partitioned cell members, the anode layer (the embedded metal mesh) and the cathode layer (the embedded metal mesh) in the adjacent cell members are connected through a metal mesh 24 made of the same conductive material passed through a gap between the adjacent cell members.

That is, as is illustrated, the fuel cell unit is constituted from a plurality of the partitioned cell members C₁, C₂, etc., and each partitioned cell member is constituted from a solid electrolyte substrate, an anode layer and a cathode layer. For example, referring to the partitioned cell member C₁, an anode layer 2₁ having embedded therein a metal mesh 2M₁ is provided in one surface of the solid electrolyte substrate 1₁, and a cathode layer 3₁ having embedded therein a metal mesh 3M₁ is provided in another surface of the same substrate 1₁. The metal mesh 2M₁ of the partitioned cell member C₁ and the metal mesh 3M₂ of the partitioned cell member C₂ adjacent thereto are electrically connected through either of the metal meshes 2M₁ and 3M₂ (For the convenience, the reference number 24 is used to indicate the metal mesh used in the illustrated fuel cell unit). Thus, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

Fig. 12 is a cross-sectional view of the fuel cell unit in which a plurality of the partitioned cell members are disposed to form a ring of the partitioned cell members. That is, in the illustrated fuel cell unit, a connection of the adjacent cell members is made with a certain connection angle so that the resulting aggregate of the partitioned cell members (fuel cell unit) shows a cylindrical arrangement pattern as a whole, whereas the partitioned cell members were connected at a connection angle of 180° in the fuel cell units described above referring to Figs. 8 to 11 to make a flat-type fuel cell unit. Further, although not illustrated, the ring of the fuel cell units further comprises a ring-shaped outer wall surrounding the same.

That is, in the illustrated instance, the fuel cell unit is constituted from a plurality of the partitioned cell members C₁, C₂, etc., and the partitioned cell members each is constituted from a solid electrolyte substrate, an anode layer and a cathode layer. For example, referring to the partitioned cell member C₁, an anode layer 2₁ is provided in one surface of the solid electrolyte substrate 1₁, and a cathode layer 3₁ is provided in another surface of the same substrate 1₁. The anode layer 2₁ of the partitioned cell member C₁ and the cathode layer 3₂ of the partitioned cell member C₂ adjacent thereto are electrically connected through a conductive wire 23 passed through a gap between the adjacent cell members C₁ and C₂. Thus, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

Referring again to Fig. 12, it should be noted, in the illustrated fuel cell unit, that although the fuel cell unit is in the form of a cylinder, its partitioned cell members are formed by separating the cylinder along its circumference and the resulting cell members are sequentially connected in series, it is also possible to produce the partitioned cell members by separating the cylinder along its axis so that at least a part of the resulting cell members are connected in parallel.

### EXAMPLES

The present invention will be further described with reference to the examples thereof. However, it should be noted that the present invention is not restricted to the following examples.

### Production of Direct Flame-Contacting Fuel Cell

A green sheet of SDC (samaria-doped ceria: Ce_{0.8}SM_{0.2}O₁₉) is fabricated to form a cylindrical electrolyte body having an inner diameter of about 10mm, a thickness of about 0.2mm and a height of about 50mm. Next, a mixed paste of 8mole% Li-doped Ni oxide and SDC (mixing ratio of 25wt.% and 70wt.%) having added thereto 5wt.% of Rh₂O₃ is coated over an inner side surface of the resulting electrolyte body to form an anode layer. Similarly, a mixed paste of SSC (samarium strontium cobaltite: Sm_{0.5}Sr_{0.5}CoO₃) and SDC (mixing ratio of 50wt.% and 50wt.%) is coated over an outer side surface of the electrolyte body to form a cathode layer. Next, a platinum mesh having connected therewith a platinum wire is embedded in each of the paste layers coated over both surfaces of the electrolyte body. After application of the mixed paste to both surfaces of the electrolyte body, the electrolyte body is contained in a firing furnace and fired at a temperature of about 1,200°C for about 60 minutes. A cylindrical fuel cell unit having an anode layer and a cathode layer in an inner side surface and an outer side surface of the electrolyte body, respectively, is thus obtained.

The resulting fuel cell unit is fixed with an inorganic adhesive to through-holes opened in a bottom section of the first steel-made cylinder having an inner diameter of about 40mm and a height of about 80mm. After inversion of the first cylinder, the first cylinder is fixed to a second steel-made cylinder having an inner diameter of about 25mm and a height of about 50mm and further having inserted into a bottom section thereof a gas nozzle for generating a flame. In the fixation of the inverted first cylinder to the second cylinder, the first and second cylinders are carefully aligned so that a central axis of the fuel cell unit is positioned in a center of the resulting fuel cell, and a gap of about 1mm is created between the bottom section of the second cylinder and the lower end of the fuel cell unit and between the upper end of the second cylinder and the bottom surface of the first cylinder, respectively.

Then, in the resulting fuel cell, n-butane gas is supplied to a gas nozzle of the combustion chamber, followed by igniting the gas. While supplying a fresh air from a lower section thereof to the combustion chamber, the electricity generation by the fuel cell is determined. The amount of air supply and the temperature of the fuel cell unit are suitably controlled, because it is observed that a flame can flow or a flame can be produced above the fuel cell unit with a supply of an excess amount of the air or application of the lower temperature to the fuel cell unit. A terminal voltage of about 0.7 volts and a maximum output power of about 40 mW is observed in the fuel cell.

## Claims

1. A solid oxide fuel cell in which one or more cell units of the fuel cell are disposed in proximity to a flame, generated upon combustion of a gaseous fuel material, and is exposed to the flame, thereby creating electricity, in which
the fuel cell is provided with a combustion chamber for combusting the fuel material in the form of a cylinder,
a wall of the cylindrical combustion chamber is defined by the cell units of the fuel cell,
the cell units comprise a substrate consisting of a solid electrolyte, an anode layer formed on a combustion chamber side of the substrate and a cathode layer formed on another side of the substrate opposed to the anode layer, and
the wall of the combustion chamber has a composite wall structure consisting of at least two wall layers wherein air is guided through an air-guiding path formed between the adjacent wall layers, the innermost wall layer adjacent to the combustion chamber is at least constituted from the cell units, and atmospheric air is supplied to a combustion chamber after flowing through the air-guiding path.

2. The fuel cell according to claim 1, in which a combustion opening of the fuel material is disposed in a bottom section of the combustion chamber.

3. The fuel cell according to claim 2, in which the gaseous fuel material comprises a gas or gas mixture generated from the liquid selected from the group consisting of hydrocarbon gas, gasoline, alcohol and ketone.

4. The fuel cell according to claim 1, in which a lower end section of the combustion chamber is provided with an air supplying opening capable of contributing combustion of the fuel material and capable of conducting intake of the air to be supplied to the anode layer.

5. The fuel cell according to claim 1, in which the wall of the combustion chamber further comprises at least one air-introducing perforation or slit.

6. The fuel cell according to claim 1, in which the combustion chamber further comprises an air-supplying mechanism for introducing air into the combustion chamber.

7. The fuel cell according to claim 1, in which the cell units are in the form of a single cell member comprising the substrate consisting of the solid electrolyte, the anode layer and the cathode layer.

8. The fuel cell according to claim 1, in which the cell units are constituted from a combination of two or more partitioned cell members, the partitioned cell members being disposed in a lengthwise direction, a crosswise direction or lengthwise and crosswise directions to form the cell units, and the cell members each comprises the substrate consisting of the solid electrolyte, the anode layer and the cathode layer, and are electrically connected in series or in parallel.

9. The fuel cell according to claim 8, in which the anode layer and the cathode layer each is connected in series in the adjacent cell members.

10. The fuel cell according to claim 9, in which a common substrate consisting of the solid electrolyte is contained in the adjacent cell members, and an anode layer of one cell member is electrically connected in series through a conductor via, applied in a full thickness of the common substrate, to a cathode layer of the adjacent cell member.

11. The fuel cell according to claim 9, in which a common substrate consisting of the solid electrolyte is contained in the adjacent cell members, and an anode layer of one cell member is electrically connected in series through a conductor wire, extended and passed through a via-hole of the common substrate, to a cathode layer of the adjacent cell member.

12. The fuel cell according to claim 9, in which a substrate consisting of the solid electrolyte is contained in each of the adjacent cell members, and an anode-sided metal mesh embedded or secured in an anode layer of one cell member is electrically connected in series through a conductor wire, extended and passed through a gap between the adjacent cell members, to a cathode-sided metal mesh embedded or secured in a cathode layer of the adjacent cell member.

13. The fuel cell according to claim 9, in which a substrate consisting of the solid electrolyte is contained in each of the adjacent cell members, and an anode-sided metal mesh embedded or secured in an anode layer of one cell member is electrically connected in series through a connecting metal mesh, extended and passed through a gap between the adjacent cell members, to a cathode-sided metal mesh, embedded or secured in a cathode layer of the adjacent cell member, which may be the same or different from the anode-sided metal mesh, the connecting metal mesh being either the anode-sided metal mesh or the cathode-sided metal mesh.

14. The fuel cell according to any one of claims 1 to 13, in which the fuel cell is a combination of two or more fuel cell structures each capable of acting as a fuel cell.

15. The fuel cell according to claim 14, in which a group of the fuel cell structures is contained in a casing.
